# FASCICULE DE BREVET EUROPEEN

(11) **EP 1 970 983 B1**
(45) Date de publication et mention de la délivrance du brevet: **25.07.2012**
(21) Numéro de dépôt: 08290190.1
(22) Date de dépôt: 28.02.2008
(51) Int. Cl.: H01M 2/30

(54) **Terminal électrique pour accumulateur étanche**
Elektrisches Endpol für wasserdichten Akkumulator
Electric terminal for sealed accumulator

(30) Priorité: 09.03.2007 FR 0701729
(43) Date de publication de la demande: 17.09.2008
(73) Titulaire: SAFT, 93170 Bagnolet (FR)
(72) Inventeur: Vigier, Nicolas, 86130 Jaunay-Clan (FR)
(74) Mandataire: Hirsch & Associés

(56) Documents cités:
- EP-A- 0 457 569
- FR-A- 2 748 608

## Description

La présente invention se rapporte à un terminal électrique pour accumulateur étanche.

L'invention concerne tout type d'accumulateur étanche, notamment les accumulateurs de type nickel-cadmium, nickel-métal hydrure et lithium-ion. Ces accumulateurs peuvent être de format cylindrique, de format rectangulaire (connu également sous le terme de prismatique) ou semi-prismatique (de forme oblong).

Un accumulateur étanche ou générateur électrochimique étanche (ces deux termes étant équivalents, on utilisera le terme d'accumulateur dans la présente description) comprend de façon connue en soi un faisceau électrochimique comportant une alternance d'électrodes positives et négatives encadrant des séparateurs imprégnés d'électrolyte ; ce faisceau électrochimique constitue le coeur de l'accumulateur. Typiquement, chaque électrode est composée d'un collecteur de courant métallique, appelé aussi feuillard, supportant sur au moins une de ses faces la matière électrochimiquement active. Chaque électrode est connectée électriquement à une sortie de courant qui assure la continuité électrique entre l'électrode et l'application extérieure à laquelle l'accumulateur est associé. Le faisceau d'électrodes est disposé dans un conteneur fermé de manière étanche par un couvercle ; le couvercle peut supporter des bornes de sortie de courant des deux polarités. Une première borne de sortie de courant, par exemple la borne positive, est généralement soudée sur le couvercle. Une seconde borne de sortie de courant, par exemple la borne négative, passe à travers le couvercle ; elle est généralement fixée sur celui-ci par sertissage et des joints isolant électriquement la borne de sortie de courant négative du couvercle. Des terminaux électriques sont alors raccordés aux bornes de sortie de courant pour liaison à une application extérieure ; une carte électronique est aussi typiquement reliée aux terminaux électriques de l'accumulateur pour contrôler le fonctionnement de l'accumulateur.

Diverses solutions existent dans l'état de la technique pour raccorder des terminaux électriques aux bornes de sortie positive et négative de l'accumulateur et à une carte électronique.

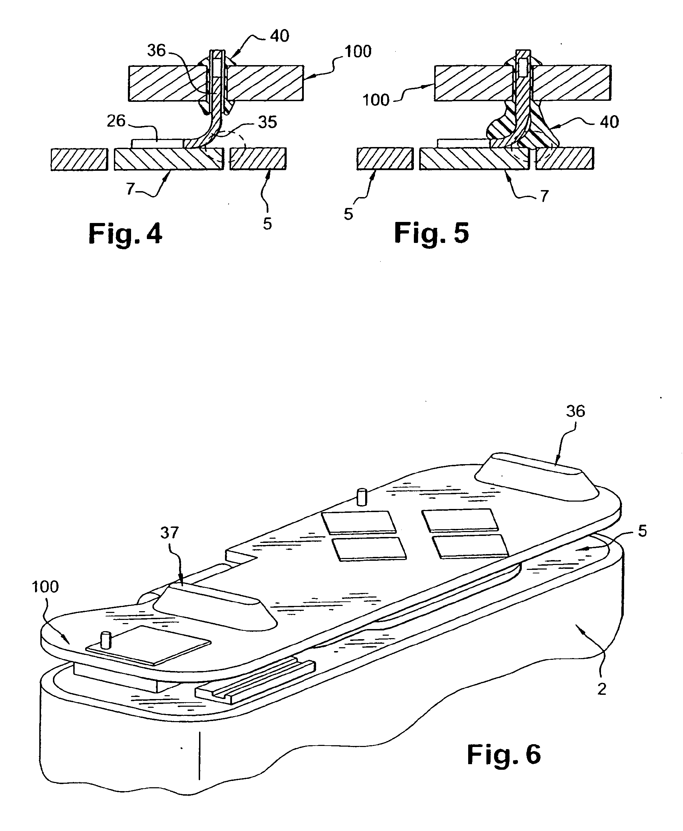

Par exemple, les terminaux électriques peuvent être en nickel ou en acier nickelé; ils sont soudés, électriquement, par laser ou ultrasons, à l'accumulateur et brasés à une carte électronique. C'est par exemple le cas des accumulateurs vendus par la société demanderesse sous la référence MP176065HD notamment (terminal en nickel soudé électriquement sur l'accumulateur et brasé sur la carte électronique). Le nickel est cependant un matériau de résistivité élevée ; les terminaux doivent donc être volumineux pour permettre le passage de courants forts, notamment pour des applications de puissance (télécom, automobile). De tels terminaux occupent donc une place importante, pèsent lourds et les temps de brasage avec la carte électronique sont longs car les terminaux mettent du temps à chauffer. De plus, la brasure d'un terminal en nickel avec une carte électronique peut engendrer une coulée d'étain le long du terminal et provoquer un court circuit entre la borne de sortie de courant à laquelle le terminal est soudé et l'autre polarité. Ce phénomène sera expliqué plus en détail en référence à la figure 5 par comparaison avec l'invention.

Les terminaux en nickel peuvent également être conçus pour être vissés ou soudés électriquement à une carte électronique.

Il existe aussi des terminaux en cuivre, mais le cuivre se soude plus difficilement au laser avec l'accumulateur et se soude très mal en soudure électrique. En outre, la brasure d'un terminal en cuivre avec une carte électronique peut également engendrer une coulée d'étain comme dans le cas d'un terminal en nickel.

Par ailleurs, pour des raisons de poids et de coûts de la matière première, on cherche à réaliser des conteneurs d'accumulateur en aluminium plutôt qu'en inox. L'aluminium présente une meilleure dissipation thermique et une meilleure conductivité électrique ; il est aussi plus léger et moins cher en unité de poids que l'inox.

Cependant, les terminaux en nickel se soudent mal sur un conteneur en aluminium à cause de la forte épaisseur de nickel à utiliser pour passer la puissance ; la soudure laser est alors « cassante ». On pourrait alors utiliser des terminaux électriques en aluminium, qui se souderaient bien au conteneur en aluminium ; mais de tels terminaux ne peuvent pas être soudés électriquement à la carte électronique car l'aluminium est un trop bon conducteur électrique ce qui perturbe la soudure. Ces terminaux électriques en aluminium ne peuvent pas non plus être brasés en l'état à la carte électronique car l'étain et l'aluminium sont répulsifs.

Par exemple, les accumulateurs Lithium-ion vendus par la société demanderesse sous la référence VL7P, présentent des terminaux à visser, pour connexion entre eux et/ou pour liaison à une carte électronique. Ils sont en aluminium 1050 au positif (soudé au laser sur le boîtier en aluminium) et en cuivre nickelé au négatif (serti sur le boîtier).

Or, le brasage des terminaux électriques à la carte électronique est avantageux à mettre en oeuvre à une échelle industrielle car la stabilité du contact électrique est assurée dans le temps.

Il existe donc un besoin pour des terminaux électriques d'accumulateur qui présentent un encombrement réduit, qui puissent être soudés facilement aux bornes de sortie de courant et qui puissent être brasés à une carte électronique sans risque de court-circuit.

A cet effet, l'invention propose d'utiliser un terminal en aluminium qui présente une zone ayant reçue un traitement de surface de type étamage pour permettre un brasage avec une carte électronique.

L'invention concerne plus particulièrement un terminal électrique pour accumulateur étanche comprenant un corps de pièce en aluminium avec au moins une zone étamée pour brasage à une carte électronique et au moins une zone non étamée pour connexion à une borne de sortie de courant de l'accumulateur.

Selon un mode de réalisation, le terminal comprend une zone coudée, la zone étamée s'étendant sensiblement à 90° d'une zone non étamée. Selon un mode de réalisation, la zone coudée est non étamée.

Selon un mode de réalisation, la zone étamée s'étend sur chaque face du corps de pièce.

Selon un mode de réalisation, la zone étamée présente un orifice permettant un passage d'étain de part et d'autre du corps de pièce lors du brasage.

Selon un mode de réalisation, la zone étamée présente un rebord adapté à recevoir la carte électronique en appui.

Selon un mode de réalisation, la zone non étamée intègre un élément coupe circuit. Selon un mode de mise en oeuvre, la zone non étamée comprend une connexion à une borne intermédiaire de l'accumulateur, une connexion à une borne de sortie de courant de l'accumulateur, une pièce de liaison s'étendant entre la borne intermédiaire et la borne de sortie de courant, et au moins une fragilisation de la pièce de liaison.

L'invention concerne aussi un accumulateur étanche comprenant :
- un conteneur comportant des bornes de sortie de courant positive et négative,
- un premier terminal électrique selon l'invention, une zone en aluminium étant électriquement reliée à une borne de sortie de courant d'une première polarité,
- un second terminal électrique selon l'invention, une zone en aluminium étant électriquement reliée à une borne de sortie de courant d'une deuxième polarité,
- une carte électronique brasée sur la zone étamée du premier terminal électrique et sur la zone étamée du second terminal électrique.

Selon un mode de réalisation, le conteneur est en aluminium.

Selon un mode de réalisation, la zone en aluminium d'au moins un terminal est soudée à une borne de sortie de courant.

L'invention concerne en outre un procédé d'assemblage d'une carte électronique à un accumulateur étanche selon l'invention, comprenant les étapes de :
- connexion électrique de la zone en aluminium du premier terminal sur une borne de sortie de courant d'une première polarité,
- connexion électrique de la zone en aluminium du second terminal sur une borne de sortie de courant d'une deuxième polarité,
- brasage de la carte électronique sur la zone étamée du premier terminal électrique et sur la zone étamée du second terminal électrique.

Selon un mode de réalisation, au moins une connexion électrique de la zone en aluminium d'au moins un terminal à au moins une borne de sortie de courant est une soudure au laser.

D'autres caractéristiques et avantages de l'invention apparaîtront à la lecture de la description qui suit, donnée à titre d'exemple et en référence aux figures annexées qui montrent :
- figure 1, une vue en perspective d'un terminal électrique selon un mode de réalisation de l'invention ;
- figure 2, une vue en perspective d'un terminal électrique selon un autre mode de réalisation de l'invention ;
- figure 3, une vue en coupe des terminaux selon l'invention soudés aux bornes d'un accumulateur ;
- figure 4, une vue de détail schématique d'un terminal selon l'invention soudé à la borne d'un accumulateur ;
- figure 5, une vue de détail schématique d'un terminal selon un art antérieur soudé à la borne d'un accumulateur ;
- figure 6, une vue en perspective d'une carte électronique brasée aux terminaux d'un accumulateur selon l'invention.

L'invention concerne des terminaux électriques pour accumulateur étanche.

Selon l'invention, un terminal électrique comprend un corps de pièce en aluminium. Il est ainsi possible de réaliser des terminaux de plus petite dimension et plus légers par rapport aux terminaux en nickel. En effet, l'aluminium présente une très bonne conductivité électrique - environ triple par rapport au nickel - et permet le passage de forts courants sur une petite section.

Le terminal selon l'invention présente une zone étamée, qui permet un brasage efficace avec une carte électronique, et une zone non étamée, c'est-à-dire en aluminium pur afin que le terminal puisse être efficacement connecté à une borne de sortie de courant et notamment être soudé au laser sur un conteneur en aluminium.

Dans le cadre de l'invention, une distinction est faite entre brasage et soudure. Le brasage consiste à assembler des pièces métalliques à l'aide d'un alliage d'apport à l'état liquide, généralement de l'étain, qui possède une température de fusion inférieure à celle des pièces que l'on désire réunir, généralement comprise entre 280°C et 310°C. Lors du brasage, les pièces à assembler ne participent pas par fusion à la constitution du joint entre les pièces. Le brasage est notamment utilisé lorsque la quantité de matière métallique sur une des pièces à assembler est limitée, ce qui est le cas pour une carte électronique. En revanche, une soudure consiste à assembler deux pièces en provoquant la fusion de leurs bords ; les pièces à assembler participent donc par fusion à la constitution du joint, la quantité de matière métallique doit donc être suffisante.

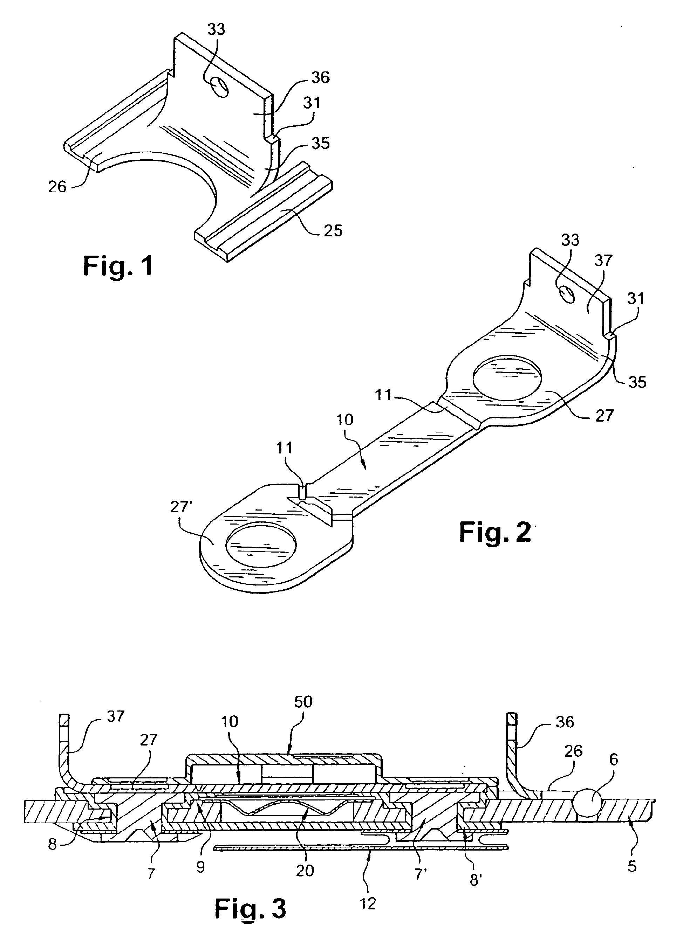

L'invention va maintenant être décrite en référence à un premier mode de réalisation illustré sur la figure 1. Le terminal électrique de la figure 1 est particulièrement bien adapté à une connexion avec le conteneur formant la borne positive de l'accumulateur ; mais il est entendu que le terminal illustré sur cette figure 1 pourrait également être relié à une borne de sortie de courant positive ou négative traversant le conteneur de l'accumulateur.

Le terminal électrique de la figure 1 comprend un corps de pièce coudé sensiblement à 90°. Au moins une zone du corps de pièce est étamée 36 et au moins une autre zone du corps de pièce est en aluminium pur 26, par exemple de l'aluminium 1050. Le corps de pièce peut être livré au fabricant d'accumulateur avec la conformation coudée et avec le traitement de surface formant la zone étamée. La zone étamée 36 peut être constituée par un revêtement de surface de type étain de 10 µm d'épaisseur pour un corps de pièce de 0,6 mm d'épaisseur environ.

La zone en aluminium 26 (c'est-à-dire une zone non traitée par étamage) est destinée à être électriquement reliée à une borne de sortie de courant d'un accumulateur. Par exemple, des languettes 25 peuvent s'étendre sur chaque bord de la zone en aluminium 26. Ces languettes 25, en aluminium pur, servent de ligne de soudure du terminal au couvercle du conteneur de l'accumulateur si celui-ci est en aluminium. On peut également envisager la soudure laser d'un terminal en aluminium selon l'invention sur un conteneur d'accumulateur en inox ou en acier nickelé.

La zone étamée 36 s'étend sensiblement à 90° de la zone en aluminium 26 destinée à être soudée à la borne de sortie de courant de l'accumulateur. La zone coudée 35 fait partie de la zone en aluminium pur, c'est-à-dire n'est pas étamée. La zone coudée 35 constitue ainsi une zone d'arrêt de la brasure comme cela sera expliqué en référence aux figures 4 et 5.

La zone étamée 36 est située sur chaque face du corps de pièce et un orifice 33 permet un passage d'étain de part et d'autre du corps de pièce lors du brasage. Une carte électronique peut ainsi venir s'enfiler sur la zone étamée et être électriquement reliée au terminal par brasage comme cela sera expliqué en référence à la figure 4. La figure 1 montre aussi un rebord 31 sur la zone étamée 36. Ce rebord 31 permet de recevoir la carte électronique en appui avant l'opération de brasage.

La figure 2 illustre un autre mode de réalisation d'un terminal électrique selon l'invention. Le terminal de la figure 2 est particulièrement bien adapté à une connexion avec la borne traversante négative de l'accumulateur. Le terminal de la figure 2 intègre un coupe circuit.

Comme sur la figure 1, le terminal électrique de la figure 2 comprend un corps de pièce coudé avec une zone étamée 37 et une zone en aluminium pur 27 ; la zone étamée 37 s'étend sensiblement à 90° de la zone en aluminium 27 destinée à être soudée à une borne de sortie de courant de l'accumulateur et la zone coudée 35 fait également partie de la zone en aluminium pur, c'est-à-dire n'est pas étamé. Comme sur la figure 1, un orifice 33 est prévu dans la zone étamée 37 pour un passage d'étain de part et d'autre du corps de pièce lors du brasage et un rebord 31 permet de recevoir la carte électronique en appui avant l'opération de brasage.

La figure 2 montre en outre un élément avec un coupe circuit intégré au corps de pièce dans la zone en aluminium pur, c'est-à-dire dans la zone connectée à la borne de sortie de courant de l'accumulateur.

En effet, un accumulateur est généralement conçu pour fonctionner dans des conditions dites nominales, c'est-à-dire dans des gammes de température, courant et tension données. L'utilisation d'un accumulateur étanche hors des conditions nominales, comme par exemple une surcharge accidentelle, un court-circuit, une température supérieure à la température maximale de fonctionnement, etc. crée un risque d'explosion.

Des dispositifs de sécurité existent. Par exemple, on connaît du document EP-A-1 705 735 un dispositif de sécurité pour accumulateur étanche comprenant une pièce de liaison s'étendant sur le dessus du couvercle du conteneur et adapté à conduire un courant électrique entre une électrode d'une polarité et sa borne de sortie de courant et une membrane électriquement isolée de la pièce de liaison et adaptée à se déformer sous l'effet d'une surpression dans le conteneur, la déformation de la membrane étant adaptée à rompre la pièce de liaison.

La figure 3 montre en coupe longitudinale le haut d'un accumulateur lithium-ion prismatique étanche muni d'un tel dispositif de sécurité et de ses deux terminaux en aluminium étamé.

L'accumulateur de la figure 3 comprend un conteneur avec un couvercle 5 qui supporte les bornes de sortie de courant 6 et 7. La borne positive 6 est soudée sur le couvercle et la borne négative 7 passe à travers le couvercle. Un joint 8 isole électriquement la borne de sortie de courant négative 7 du couvercle. Une borne intermédiaire 7' est prévue avec un joint 8' d'isolation électrique. Un dispositif coupe-circuit est disposé entre la borne intermédiaire 7' et la borne de sortie de courant négative 7.

Le coupe-circuit comprend une pièce de liaison 10 électriquement conductrice et une membrane 20 adaptée à se déformer et à rompre la pièce de liaison 10 de façon à interrompre le passage du courant de manière irréversible. Une couche isolante 9 est prévue entre la membrane 20 et la pièce de liaison 10.

Selon l'invention, le terminal électrique de la figure 2 peut intégrer la pièce de liaison 10 de l'élément coupe circuit du dispositif de sécurité de l'accumulateur. La pièce de liaison 10 présente une forme générale de plaque rectangulaire rigide reliant une zone de connexion 27 destinée à être reliée à la borne de sortie de courant négative et une zone de connexion 27' destinée à être reliée à la borne intermédiaire traversant le couvercle du conteneur. Ces zones de connexion 27, 27' peuvent être fixées aux bornes 7, 7' par rivetage ou soudure laser. La pièce de liaison 10 est formée dans la zone en aluminium du terminal selon l'invention ; elle présente deux fragilisations 11 qui permettent à la pièce de liaison de se rompre sous l'effort de la membrane 20 déformée. L'aluminium présente des caractéristiques mécaniques favorables à une rupture nette sous l'effet de poussée de la membrane 20. Afin d'éviter tout risque de détérioration du coupe circuit, un capot de protection 50 peut recouvrir la pièce de liaison, en particulier les fragilisations 11.

Le terminal électrique selon l'invention, qu'il s'agisse du mode de réalisation de la figure 1 ou de la figure 2 avec coupe circuit, est brasé à une carte électronique. Les deux terminaux électriques sont d'épaisseur sensiblement identique pour être brasées avec les mêmes paramètres. La figure 4 illustre schématiquement le brasage du terminal électrique selon l'invention à une carte électronique et la figure 5 illustre schématiquement le brasage d'un terminal électrique en nickel ou en cuivre à une carte électronique. La figure 5 n'est pas selon l'invention. Les figures 4 et 5 montrent ainsi le couvercle 5 du conteneur de l'accumulateur - à la polarité positive par exemple - et une borne de sortie de courant traversante 7 - à la polarité négative par exemple. Les figures 4 et 5 montrent aussi une carte électronique 100 et la brasure étain 40 constituant le métal d'apport de l'opération de brasage.

Le terminal selon l'invention (figure 4) présente une zone en aluminium 26 reliée à la borne de sortie de courant 7, par soudure ou rivetage par exemple, et une zone étamée 36 s'étendant sensiblement perpendiculairement au plan du couvercle 5 et de la carte 100. La brasure 40 est introduite au niveau de la zone étamée 36 du terminal et se répand de par et d'autre du corps de pièce par l'orifice 33. La brasure 40 ne coule cependant pas vers le couvercle 5 car la zone coudée 35 constitue une zone d'arrêt de la brasure. En effet, la zone coudée 35 est en aluminium et l'étain est répulsif avec l'aluminium. Les risques de court circuit entre les bornes de polarités opposées avec la brasure 40 sont ainsi réduits. On voit en effet sur la figure 5 que si le terminal est en nickel ou en cuivre ou en tout autre matériau non répulsif à l'étain, la brasure 40 peut couler le long de la branche du terminal qui est brasée à la carte 100 et faire court-circuit avec le couvercle 5 à la polarité opposée.

L'invention permet ainsi d'assembler une carte électronique 100 avec un accumulateur en brasant la carte sur le dessus du couvercle 5 du conteneur 2 comme cela est illustré sur la figure 6. Un assemblage simple et fiable peut être réalisé. Notamment, la zone en aluminium d'un premier terminal est connecté électriquement à une borne de sortie de courant d'une première polarité, la zone en aluminium du second terminal est connecté électriquement à la borne de sortie de courant de l'autre polarité, et la carte électronique est enfichée puis brasée sur les zones étamées des premier et second terminaux électriques. En outre, si le conteneur 2 de l'accumulateur est en aluminium, pour les raisons de coût et de poids évoquées précédemment, le terminal électrique relié au couvercle 5 du conteneur peut être soudé facilement et efficacement.

Les modes de réalisation détaillés ci-dessus et les figures doivent être considérés comme ayant été présentés à titre illustratif et non restrictif; l'invention n'est pas censée être limitée aux détails fournis ici mais peut être modifiée en restant dans le cadre de la portée des revendications annexées. En particulier, les formes et dimensions du terminal électrique peuvent varier par rapport à ce qui est représenté sur les figures sans sortir du cadre de l'invention.

## Revendications

1. Terminal électrique pour accumulateur étanche comprenant un corps de pièce en aluminium avec au moins une zone étamée (36, 37) pour brasage à une carte électronique et au moins une zone non étamée (26, 27) pour connexion à une borne de sortie de courant de l'accumulateur.

2. Terminal selon la revendication 1, comprenant une zone coudée (35), la zone étamée s'étendant sensiblement à 90° d'une zone non étamée.

3. Terminal selon la revendication 2, dans lequel la zone coudée est non étamée.

4. Terminal selon l'une des revendications 1 à 3, dans lequel la zone étamée s'étend sur chaque face du corps de pièce.

5. Terminal selon la revendication 4, dans lequel la zone étamée (36, 37) présente un orifice (33) permettant un passage d'étain de part et d'autre du corps de pièce lors du brasage.

6. Terminal selon l'une des revendications 1 à 5, dans lequel la zone étamée présente un rebord (31) adapté à recevoir la carte électronique en appui.

7. Terminal selon l'une des revendications 1 à 6, dans lequel la zone non étamée (27, 27') intègre un élément coupe circuit (10, 11).

8. Terminal selon la revendication 7, dans lequel la zone non étamée comprend :
- une connexion (27') à une borne intermédiaire de l'accumulateur,
- une connexion (27) à une borne de sortie de courant de l'accumulateur,
- une pièce de liaison (10) s'étendant entre la borne intermédiaire et la borne de sortie de courant,
- au moins une fragilisation (11) de la pièce de liaison.

9. Accumulateur étanche comprenant :
- un conteneur comportant des bornes de sortie de courant positive (6) et négative (7),
- un premier terminal électrique selon l'une des revendications 1 à 6, une zone (26) en aluminium étant électriquement reliée à une borne de sortie de courant (6) d'une première polarité,
- un second terminal électrique selon l'une des revendication 1 à 8, une zone (27) en aluminium étant électriquement reliée à une borne de sortie de courant (7) d'une deuxième polarité,
- une carte électronique (100) brasée sur la zone étamée (36) du premier terminal électrique et sur la zone étamée (37) du second terminal électrique.

10. Accumulateur selon la revendication 9, dans lequel le conteneur est en aluminium.

11. Accumulateur selon la revendication 9 ou 10, dans lequel la zone en aluminium d'au moins un terminal est soudée à une borne de sortie de courant.

12. Procédé d'assemblage d'une carte électronique (100) à un accumulateur étanche selon l'une des revendications 9 à 11, comprenant les étapes de :
- connexion électrique de la zone en aluminium (26) du premier terminal sur une borne de sortie de courant (6) d'une première polarité,
- connexion électrique de la zone en aluminium (27) du second terminal sur une borne de sortie de courant (7) d'une deuxième polarité,
- brasage de la carte électronique (100) sur la zone étamée (36) du premier terminal électrique et sur la zone étamée (37) du second terminal électrique.

13. Procédé selon la revendication 12, dans lequel au moins une connexion électrique de la zone en aluminium d'au moins un terminal à au moins une borne de sortie de courant est une soudure au laser.

## Claims

1. Electrical terminal for a sealed accumulator comprising a single-piece body made of aluminium with at least one tinned region (36, 37) for soldering onto an electronic card and at least one non-tinned region (26, 27) for connection to a current output terminal of the accumulator.

2. Terminal according to claim 1, comprising a bent region (35), the tinned region extending substantially at 90° from a non-tinned region.

3. Terminal according to claim 2, wherein the bent region is not tinned.

4. Terminal according to one of claims 1 to 3, wherein the tinned region extends over each face of the single-piece body.

5. Terminal according to claim 4, wherein the tinned region (36, 37) has an aperture (33) allowing a passage of tin on both sides of the single-piece body during soldering.

6. Terminal according to one of claims 1 to 5, wherein the tinned region has a shoulder (31) suitable for receiving and supporting the electronic card.

7. Terminal according to one of claims 1 to 6, wherein the non-tinned region (27, 27') has an integral circuit breaker element (10, 11).

8. Terminal according to claim 7, wherein the non-tinned region comprises:
- a connection (27') to an intermediate terminal of the accumulator,
- a connection (27) to a current output terminal of the accumulator,
- a connection piece (10) extending between the intermediate terminal and the current output terminal,
- at least one weak point (11) of the connection piece.

9. Sealed accumulator comprising:
- a container comprising positive (6) and negative (7) current output terminals,
- a first electrical terminal according to one of claims 1 to 6, a region (26) made of aluminium being electrically connected to a current output terminal (6) of a first polarity,
- a second electrical terminal according to one of claims 1 to 8, a region (27) made of aluminium being electrically connected to a current output terminal (7) of a second polarity,
- an electronic card (100) soldered onto the tinned region (36) of the first electrical terminal and onto the tinned region (37) of the second electrical terminal.

10. Accumulator according to claim 9, wherein the container is made of aluminium.

11. Accumulator according to claim 9 or 10, wherein the aluminium region of at least one terminal is welded onto a current output terminal.

12. Method for assembling an electronic card (100) with a sealed accumulator according to one of claims 9 to 11, comprising the stages of:
- electrically connecting the aluminium region (26) of the first terminal to a current output terminal (6) of a first polarity,
- electrically connecting the aluminium region (27) of the second terminal to a current output terminal (7) of a second polarity,
- soldering the electronic card (100) to the tinned region (36) of the first electrical terminal and to the tinned region (37) of the second electrical terminal.

13. Method according to claim 12, wherein at least one electric connection of the aluminium region of at least one current output terminal is made by laser welding.

## Patentansprüche

1. Elektrischer Endpol für dichten Akkumulator, der einen Teilkörper aus Aluminium mit mindestens einem verzinnten Bereich (36, 37) zum Löten an eine Elektronikkarte, und mindestens einen nicht verzinnten Bereich (26, 27) zum Verbinden mit einer Stromausgangsklemme des Akkumulators aufweist.

2. Endpol nach Anspruch 1, der einen abgewinkelten Bereich (35) aufweist, wobei sich der verzinnte Bereich im Wesentlichen zu 90° zu einem nicht verzinnten Bereich erstreckt.

3. Endpol nach Anspruch 2, bei dem der abgewinkelte Bereich nicht verzinnt ist.

4. Endpol nach einem der Ansprüche 1 bis 3, bei dem sich der verzinnte Bereich auf jeder Seite des Teilkörpers erstreckt.

5. Endpol nach Anspruch 4, bei dem der verzinnte Bereich (36, 37) eine Öffnung (33) aufweist, die beim Löten ein Durchgehen von Zinn zu beiden Seiten des Teilkörpers erlaubt.

6. Endpol nach einem der Ansprüche 1 bis 5, bei dem der verzinnte Bereich eine Randleiste (31) aufweist, die geeignet ist, um die Elektronikkarte in Auflage aufzunehmen.

7. Endpol nach einem der Ansprüche 1 bis 6, bei dem der nicht verzinnte Bereich (27, 27') ein Ausschaltelement (10, 11) integriert.

8. Endpol nach Anspruch 7, bei dem der nicht verzinnte Bereich Folgendes aufweist:
- eine Verbindung (27') mit einer Zwischenklemme des Akkumulators,
- eine Verbindung (27) mit einer Stromausgangsklemme des Akkumulators,
- einen Verbindungsteil (10), der sich zwischen der Zwischenklemme und der Stromausgangsklemme erstreckt,
- mindestens eine Versprödung (11) des Verbindungsteils.

9. Dichter Akkumulator, aufweisend:
- einen Behälter, der positive (6) und negative (7) Stromausgangsklemmen aufweist,
- einen ersten elektrischen Endpol nach einem der Ansprüche 1 bis 6, wobei ein Bereich (26) aus Aluminium elektrisch mit einer Stromausgangsklemme (6) mit einer ersten Polung verbunden ist,
- einen zweiten elektrischen Endpol nach einem der Ansprüche 1 bis 8, wobei ein Bereich (27) aus Aluminium elektrisch mit einer Stromausgangsklemme (7) mit einer zweiten Polung verbunden ist,
- eine Elektronikkarte (100), die auf den verzinnten Bereich (36) des ersten elektrischen Endpols und auf den verzinnten Bereich (37) des zweiten elektrischen Endpols gelötet ist.

10. Akkumulator nach Anspruch 9, bei dem der Behälter aus Aluminium besteht.

11. Akkumulator nach Anspruch 9 oder 10, bei dem der Bereich aus Aluminium mindestens eines Endpols an eine Stromausgangsklemme geschweißt ist.

12. Verfahren zum Zusammenbauen einer Elektronikkarte (100) mit einem dichten Akkumulator nach einem der Ansprüche 9 bis 11, das die folgenden Schritte aufweist:
- elektrisches Verbinden des Bereichs aus Aluminium (26) des ersten Endpols auf einer Stromausgangsklemme (6) mit einer ersten Polung,
- elektrisches Verbinden des Bereichs aus Aluminium (27) des zweiten Endpols auf einer Stromausgangsklemme (7) mit einer zweiten Polung,
- Löten der Elektronikkarte (100) auf den verzinnten Bereich (36) des ersten elektrischen Endpols und auf den verzinnten Bereich (37) des zweiten elektrischen Endpols.

13. Verfahren nach Anspruch 12, bei dem mindestens eine elektrische Verbindung des Bereichs aus Aluminium mindestens eines Endpols mit mindestens einer Stromausgangsklemme eine Laserschweißung ist.
